# EUROPEAN PATENT APPLICATION

(11) **EP 4 822 610 A1**
(43) Date of publication of application: **14.10.2026**
(21) Application number: 26161701.3
(22) Date of filing: 02.03.2026
(51) Int. Cl.: G06N 10/60, G06N 3/09, G06N 3/065, G06N 10/20, G06N 3/045, G06N 3/084

(54) **INFORMATION PROCESSING PROGRAM, INFORMATION PROCESSING METHOD, AND INFORMATION PROCESSING DEVICE**

(30) Priority: 08.04.2025 JP 2025063979
(71) Applicant: Fujitsu Limited, Kawasaki-shi, Kanagawa 211-8588 (JP)
(72) Inventor: SONODA, Nasa, Kawasaki-shi, 211-8588 (JP)
(74) Representative: Haseltine Lake Kempner LLP

(57) **Abstract**

An information processing program causes a computer to execute a process including, in a machine learning model configured to have layers, an input of quantum data being accepted at a first layer, a preceding layer of two consecutive layers included in the layers inputting an output generated by the generation function based on an output of the quantum circuit to the quantum circuit included in a subsequent layer, inputting first quantum data to the first layer and causing first output data to be generated, and inputting, in each second layer arranged in a subsequent stage to the first layer, second quantum data to a quantum circuit that has generated a quantum feature map for an output from a layer arranged in a preceding stage of each second layer, and causing second output data to be generated.

## Description

### FIELD

The embodiments discussed herein are related to an information processing program, an information processing method, and an information processing device.

### BACKGROUND

Technology for performing machine learning using a quantum computer and a machine learning model having a deep structure is attracting attention. In such machine learning, a quantum feature map given by the dynamics of a quantum system plays an important role. A quantum feature map is a technology that maps classical data to a quantum state and uses it as a feature quantity. In a quantum feature map, classical data is mapped to a quantum feature quantity space through a quantum circuit or the dynamics of a quantum system.

As one utilization method of a quantum feature map in machine learning using a quantum computer, an iterative quantum feature map having a deep structure has been proposed, in which, after obtaining a measurement result of a quantum feature map, classical reinforcement introducing nonlinear normalization is executed and connected to the next quantum feature map.

A machine learning model trained using an iterative quantum feature map can, for example, output data that makes differences between data easier to understand. Such a machine learning model is used for classification according to the characteristics of substances and the like.

Note that, as a technology of machine learning using a quantum computer, for example, a technology has been proposed in which training is performed by repeating a process of updating parameters of a quantum neural network with an input quantum state based on a dataset as an input until a cost function falls below a threshold value.

Patent Literature 1: Japanese Laid-open Patent Publication No. 2024-146831
However, the structure of a conventional iterative quantum feature map is intended for input of classical data, and it is difficult to directly input quantum data. For example, in a machine learning model that determines a material phase based on a wave function obtained as a ground state, it is preferable to be able to directly input quantum data representing the wave function. Furthermore, when the hierarchy of the iterative quantum feature map becomes deep, information of quantum data is easily lost, and learning tends to become unstable. Thus, with the conventional technology of iterative quantum feature maps, appropriate model construction is difficult, and it has been difficult to improve the inference accuracy of a machine learning model.

Furthermore, in a technology that performs training by repeating a process of updating parameters of a quantum neural network with an input quantum state as an input until a cost function falls below a threshold value, the structure of the machine learning model differs from an iterative quantum feature map. Therefore, training of a machine learning model using an iterative quantum feature map is not considered, and it has been difficult to improve the inference accuracy of a machine learning model.

Accordingly, it is desirable to provide an information processing program, an information processing method, and an information processing device that improve the inference accuracy of a machine learning model.

### SUMMARY

According to an aspect of an embodiment, an non-transitory computer-readable recording medium stores therein an information processing program causing a computer to execute a process including, in a machine learning model configured to have a plurality of layers arranged in series, each of the plurality of layers including a quantum circuit and a generation function, an input of quantum data being accepted at a first layer at a head of the plurality of layers, and a preceding layer of two consecutive layers included in the plurality of layers inputting an output generated by the generation function included in the preceding layer based on an output of the quantum circuit included in the preceding layer to the quantum circuit included in a subsequent layer of the two consecutive layers, inputting first quantum data in a predetermined quantum state as an initial state to the first layer and causing first output data to be generated, and inputting, in each of a plurality of second layers arranged in a subsequent stage to the first layer in the plurality of layers, second quantum data in the predetermined quantum state as an initial state to a quantum circuit that has generated a quantum feature map for an output from a layer arranged in a preceding stage of each of the plurality of second layers, and causing second output data to be generated.

### BRIEF DESCRIPTION OF DRAWINGS

The invention is described, by way of example only, with reference to the following drawings, in which:
FIG. 1 is a configuration diagram of a quantum computer system;
FIG. 2 is a configuration diagram of a machine learning model according to an embodiment;
FIG. 3 is a diagram illustrating a specific example of an entanglement circuit;
FIG. 4 is a diagram illustrating an outline of a basis transformation circuit;
FIG. 5 is a diagram illustrating a specific example of a quantum feature map circuit;
FIG. 6 is a block diagram of a server;
FIG. 7 is a block diagram of a quantum computer;
FIG. 8 is a flowchart of processing until completion of training by the quantum computer system;
FIG. 9 is a flowchart of iterative quantum feature map design processing according to a first embodiment;
FIG. 10 is a flowchart of training processing and inference processing in a case of a one-stage learning algorithm;
FIG. 11 is a flowchart of iterative quantum feature map design processing according to a second embodiment;
FIG. 12 is a flowchart of training processing and inference processing in a case of a two-stage learning algorithm;
FIG. 13 is a diagram illustrating an example of a material phase that is an inference target;
FIG. 14 is a diagram illustrating experimental results; and
FIG. 15 is a hardware configuration diagram of a server.

### DESCRIPTION OF EMBODIMENTS

Preferred embodiments of the present invention will be explained with reference to accompanying drawings. Note that the information processing program, information processing method, and information processing device disclosed in the present application are not limited by the following embodiments.

### (a) First Embodiment

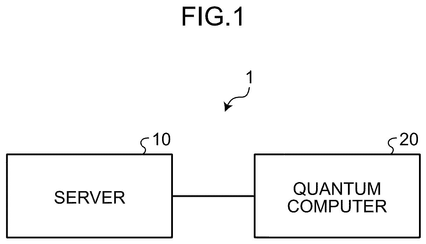

FIG. 1 is a configuration diagram of a quantum computer system. A quantum computer system 1 includes a server 10 and a quantum computer 20. The server 10 is a classical computer. This quantum computer system 1 corresponds to an example of an "information processing device".

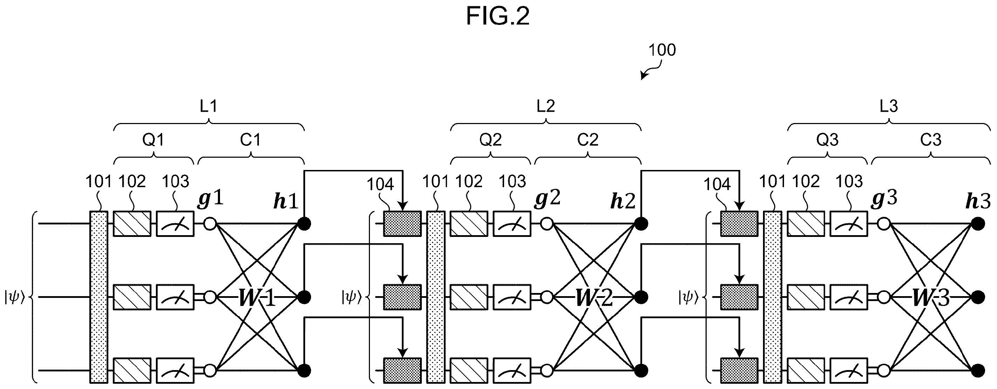

FIG. 2 is a configuration diagram of a machine learning model according to an embodiment. The quantum computer system 1 has a machine learning model 100 illustrated in FIG. 2, which is realized by the server 10 and the quantum computer 20.

The machine learning model 100 is an inference model using an iterative quantum feature map. An iterative quantum feature map refers to a model configuration having a deep structure in which, after obtaining a measurement result of a quantum feature map, classical reinforcement introducing nonlinear normalization is executed and connected to the next quantum feature map. The machine learning model 100 has a plurality of layers L1 to L3 arranged in series. Here, in FIG. 2, three hierarchies of layers L1 to L3 are illustrated, but there is no limitation on the number of hierarchies.

Layer L1 has a quantum circuit Q1 and a classical reinforcement circuit C1. Furthermore, Layer 2 has a quantum circuit Q2 and a classical reinforcement circuit C2. Furthermore, Layer 3 has a quantum circuit Q3 and a classical reinforcement circuit C3. The quantum circuits Q1 to Q3 are realized by the quantum computer 20. Furthermore, the classical reinforcement circuits C1 to C3 are realized by the server 10.

In the following description, when layers L1 to L3 are not distinguished and the number is not limited, they may be indicated as "layer Lj". Furthermore, when quantum circuits Q1 to Q3 are not distinguished and the number is not limited, they may be indicated as "quantum circuit Qj". Furthermore, when classical reinforcement circuits C1 to C3 are not distinguished and the number is not limited, they may be indicated as "classical reinforcement circuit Cj". That is, the machine learning model 100 has a plurality of layers Lj arranged in series including a quantum circuit Qj and a generation function. Details of the machine learning model 100 will be described later.

Returning to FIG. 1, the description is continued. The server 10 communicates with the quantum computer 20 via a communication line. The server 10 stores the machine learning model 100 and generates a trained machine learning model 100 by executing machine learning that trains the machine learning model 100 using the quantum computer 20. Storing the machine learning model 100 refers to a state in which the server 10 stores the configuration of the machine learning model 100, causes the quantum computer 20 to perform processing of the quantum circuit Qj, and executes processing of the classical reinforcement circuit Cj, thereby being able to execute overall processing of the machine learning model 100. Furthermore, the server 10 performs inference using the trained machine learning model 100 with inference data that is an inference target as an input.

### Machine Learning Model

Here, with reference to FIG. 2, details of the machine learning model 100 will be described. Layer L1 is the head layer arranged in series. This layer L1 corresponds to an example of a "first layer". The quantum circuit Q1 receives an input of quantum data and generates a feature quantity with a quantum state of the input quantum data as an initial state. In this case, since the input data is quantum data, the quantum circuit Q1 does not perform a quantum feature map. The quantum circuit Q1 has an entanglement circuit 101, a basis transformation circuit 102, and a measurement circuit 103.

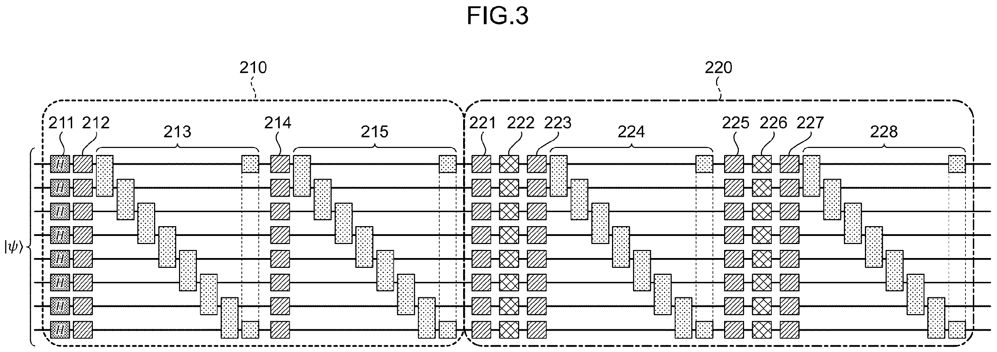

The entanglement circuit 101 generates entanglement between quantum bits in an initial state. FIG. 3 is a diagram illustrating a specific example of an entanglement circuit. The entanglement circuit 210 of FIG. 3 corresponds to the entanglement circuit 101 of layer L1.

The entanglement circuit 210 has, for example, quantum gates 211 to 215. The quantum gate 211 is, for example, an H gate. Furthermore, the quantum gates 212 and 214 are, for example, RX gates. Furthermore, the quantum gates 213 and 215 are RZZ gates. Each of the quantum gates 212 to 215 has a random angle. The quantum gates 213 and 215 act on adjacent quantum bits. Here, when each quantum bit is designated as 1st to 8th in order from the top toward the paper surface of FIG. 3, the 1st quantum bit and the 8th quantum bit are adjacent quantum bits.

The entanglement circuit 210 generates entanglement between adjacent quantum bits by the quantum gates 211 to 215. For example, the entanglement circuit 210 generates entanglement between the 1st and 2nd quantum bits, entanglement between the 2nd and 3rd quantum bits, ···, entanglement between the 8th and 1st quantum bits.

By the entanglement being generated by the entanglement circuit 210, a plurality of quantum bits become entangled and a strong correlation is created. As a result, quantum interference effects become complicated, and states having different phases become easier to distinguish with high accuracy.

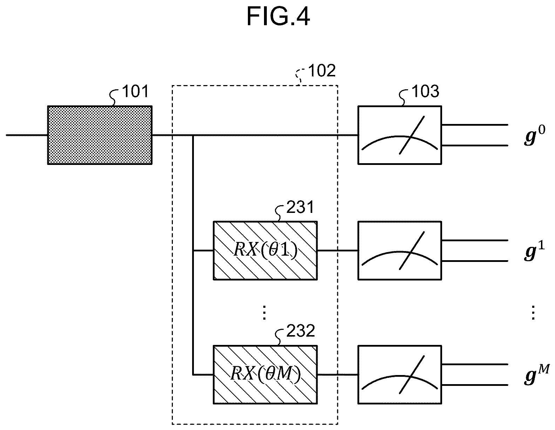

Returning to FIG. 2, the description is continued. The basis transformation circuit 102 cooperates with the measurement circuit 103 to transform the types of measurement standards used for measurement. FIG. 4 is a diagram illustrating an outline of a basis transformation circuit. FIG. 4 represents an operation on one quantum bit. The basis transformation circuit 102 has parameters θi (i=1 to M). M is the number of additional bases to be used and is an appropriate number of 1 or more. Furthermore, in FIG. 4, quantum gates 231 to 232 are illustrated, but these illustrate states in which the basis transformation circuit 102 gives respective rotations of angles θ1 to θM to quantum bits, and illustrate the same basis transformation circuit 102.

The basis transformation circuit 102 performs rotation of random single quantum bits according to the parameter θi with respect to a quantum state input from the entanglement circuit 101. For example, in FIG. 4, the basis transformation circuit 102 outputs the quantum bit as is to the measurement circuit 103 without giving rotation. Furthermore, the basis transformation circuit 102 operates as each of the quantum gates 231 to 232, gives rotations of θ1 to θM respectively to the quantum bit, and outputs to the measurement circuit 103.

Returning to FIG. 2, the description is continued. The measurement circuit 103 receives inputs of quantum states of each of a plurality of quantum bits to which rotation has been applied, which are output from the basis transformation circuit 102. Next, the measurement circuit 103 measures each quantum state in a computational basis and acquires a measurement value for each measurement basis as classical information. When a measurement function used in each layer Lj is fj(·,θj), the measurement circuit 103 calculates a measurement value g1 by g1=f1(·,θ1).

The measurement circuit 103 can perform measurement using different measurement bases for a quantum state by measuring, in a computational basis, a state of a quantum bit to which rotation has been given by the basis transformation circuit 102. For example, as illustrated in FIG. 4, the measurement circuit 103 acquires measurement values g⁰ to g^{M} as measurement results using different bases for a quantum state. Hereinafter, measurement by the measurement circuit 103 is referred to as measurement using different measurement bases.

Then, the measurement circuit 103 integrates respective measurement values by measurement using different measurement bases to generate a feature quantity of an initial state. For example, the measurement circuit 103 integrates measurement values g⁰ to g^{M} to generate one feature quantity of an initial state.

The quantum computer system 1 can improve robustness in learning of the machine learning model 100 by performing learning based on a plurality of measurement results obtained by measurement using a plurality of random different bases.

The classical reinforcement circuit C1 receives an input of a feature quantity of an initial state generated by the quantum circuit Q1. For example, in FIG. 2, the classical reinforcement circuit C1 receives an input of g1 as a feature quantity of an initial state. The classical reinforcement circuit C1 has, for example, a reinforcement function Aj (j=0 to L) expressed as Aj(gj,Wj)=2πσ(-gj,Wj). L is the number of layers of the machine learning model 100. Here, Wj is a weight (gradient). Furthermore, σ is a multidimensional sigmoid function and is expressed as σ(t)=(1/(1+e^{-t1}, 1+e^{-t2}, ··· 1+e^{-td}). t=(t1, ···,td).

The classical reinforcement circuit C1 calculates augmented data hj as hj=Aj(gj,Wj) using the reinforcement function Aj. In this case, since it is the first layer L1, the classical reinforcement circuit C1 calculates data h1 by h1=A1(g1,W1).

The quantum data input to the quantum circuit Q1 corresponds to an example of "first quantum data", and a quantum state of the quantum data input to the quantum circuit Q1 corresponds to an example of a "predetermined quantum state". A feature quantity of an initial state generated by the quantum circuit Q1 corresponds to an example of a "first feature quantity". Furthermore, entanglement between quantum bits in an initial state generated by the entanglement circuit 101 of layer L1 corresponds to an example of "first entanglement". Furthermore, the reinforcement function A1 including a weight W1 corresponds to an example of a "first generation function". Furthermore, data h1 calculated by the reinforcement function A1 corresponds to an example of "first output data".

That is, layer L1, which is the first layer, inputs first quantum data in a predetermined quantum state as an initial state and generates first output data. More specifically, layer L1, which is the first layer, generates a first feature quantity by measurement based on the first quantum data using the quantum circuit Q1. Furthermore, layer L1, which is the first layer, generates first entanglement between quantum bits for the first quantum data, and measures the first entanglement to generate the first feature quantity. Furthermore, layer L1, which is the first layer, generates first output data by an operation that performs weighting on the first feature quantity using a weight that is a parameter of the first generation function. Furthermore, layer L1, which is the first layer, generates the first feature quantity based on a plurality of feature quantities obtained by measuring the first quantum data using a plurality of types of measurement bases. Processing that causes layer L1 to generate data h1 corresponds to an example of "first generation processing".

Layer L2 is a second layer arranged in series. The quantum circuit Q2 generates a quantum feature map using data h1 output by the classical reinforcement circuit C1, receives an input of quantum data in the same quantum state as the initial state in layer L1, and generates a feature quantity with the input quantum state as an initial state. The quantum circuit Q2 has a quantum feature map circuit 104, an entanglement circuit 101, a basis transformation circuit 102, and a measurement circuit 103.

The quantum feature map circuit 104 generates a quantum feature map by embedding information of data h1 output from the classical reinforcement circuit C1. Then, the quantum feature map circuit 104 receives an input of quantum data in the same quantum state as layer L1 as an initial state, performs an operation by a quantum feature map obtained by mapping data h1 to a quantum feature quantity space, and generates an output.

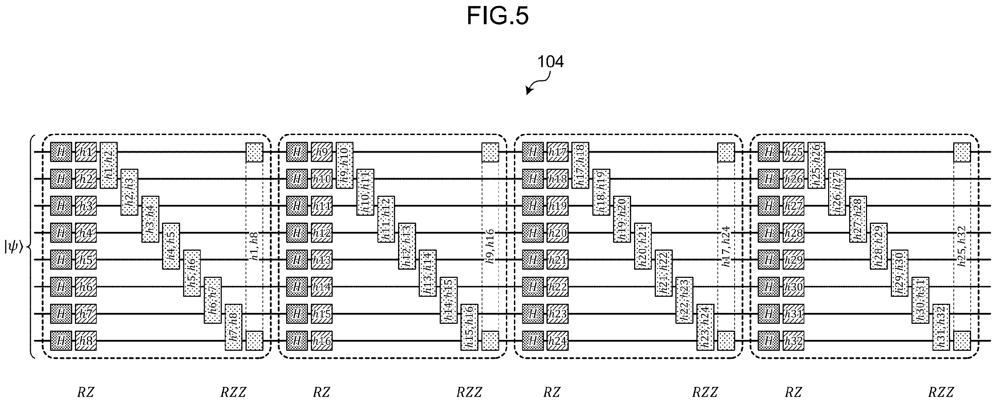

FIG. 5 is a diagram illustrating a specific example of a quantum feature map circuit. FIG. 5 illustrates the quantum feature map circuit 104 in a case where the measurement circuit 103 performs measurement with four measurement bases. The quantum feature map circuit 104 of FIG. 5 has a feature map that embeds a 32-dimensional vector. h1 to h32 illustrated in FIG. 5 indicate data used in respective quantum gates. Thus, the quantum feature map circuit 104 obtains a 32-dimensional output vector in a case where the measurement circuit 103 performs measurement with four measurement bases. For example, in a case where measurement is performed with a computational basis without using additional bases, unlike the present embodiment, the quantum feature map circuit 104 obtains an 8-dimensional output vector.

Returning to FIG. 2, the description is continued. The entanglement circuit 101 generates entanglement between quantum bits in a quantum state output from the quantum feature map circuit 104. R in FIG. 2 indicates that the entanglement circuit 220 of FIG. 3 by the entanglement circuit 101 corresponds to the entanglement circuit 101 of layer L2.

The entanglement circuit 220 has, for example, quantum gates 221 to 228 as illustrated in FIG. 3. Quantum gates 221, 223, 225, and 227 are, for example, RX gates. Furthermore, quantum gates 222 and 226 are, for example, RZ gates. Furthermore, quantum gates 224 and 228 are RZZ gates. Each of the quantum gates 221 to 228 has a random angle. Quantum gates 222 and 228 act on adjacent quantum bits.

The entanglement circuit 220 generates entanglement between adjacent quantum bits by the quantum gates 221 to 228 with respect to an output from the quantum feature map circuit 104. For example, the entanglement circuit 220 generates entanglement between the 1st and 2nd quantum bits, entanglement between the 2nd and 3rd quantum bits, ···, entanglement between the 8th and 1st quantum bits.

Returning to FIG. 2, the description is continued. The basis transformation circuit 102 cooperates with the measurement circuit 103 to transform the types of measurement standards used for measurement. The basis transformation circuit 102 of the quantum circuit Q2 also has the configuration illustrated in FIG. 4. The basis transformation circuit 102 performs rotation of random single quantum bits according to the parameter θi with respect to a quantum state input from the entanglement circuit 101.

The measurement circuit 103 receives inputs of quantum states of each of a plurality of quantum bits to which rotation has been applied, which are output from the basis transformation circuit 102. Next, the measurement circuit 103 measures each quantum state in a computational basis and acquires a measurement value for each measurement basis as classical information. Then, the measurement circuit 103 integrates respective measurement values by measurement using different measurement bases to generate a feature quantity of an input quantum state.

The classical reinforcement circuit C2 receives an input of a feature quantity of a quantum state generated by the quantum circuit Q2. For example, in FIG. 2, the classical reinforcement circuit C2 receives an input of g2 as a feature quantity of a quantum state. The classical reinforcement circuit C2 calculates data h2 by h2=A2(g2,W2).

The quantum circuit Q3 and classical reinforcement circuit C3 of layer L3 perform processing similar to the quantum circuit Q2 and classical reinforcement circuit C2 of layer L2. That is, layer L3 generates a quantum feature map of data h2 output from layer L2, extracts a feature quantity with quantum data in the same quantum state as the initial state as an input, and outputs data h3 obtained by adding classical reinforcement to the extracted feature quantity. Furthermore, in a case where layers Lj subsequent to layer L3 exist, the quantum circuits Qj and classical reinforcement circuits Cj of those layers Lj perform processing similar to the quantum circuit Q2 and classical reinforcement circuit C2 of layer L2.

Here, the classical reinforcement circuits C1 to C3 can also increase or decrease the number of dimensions of data gj by using the reinforcement function Aj(gj,Wj). By connecting a plurality of quantum circuits Qj via the reinforcement function Aj(gj,Wj), the machine learning model 100 can perform inference of a deep structure having high expressiveness.

Layers Lj subsequent to layer L1 including layers L2 to L3 correspond to an example of a "second layer". Furthermore, for example, quantum data input to the quantum circuit Q2 corresponds to an example of "second quantum data", and a quantum state of the quantum data input to the quantum circuit Q2 is the same as a quantum state input to the quantum circuit Q1, and corresponds to an example of a "predetermined quantum state". Furthermore, for example, a feature quantity of an initial state generated by the quantum circuit Q2 corresponds to an example of a "second feature quantity".

Furthermore, for example, entanglement between quantum bits in an initial state generated by the entanglement circuit 101 of layer L2 corresponds to an example of "second entanglement". Furthermore, for example, a reinforcement function A2 including a weight W2 corresponds to an example of a "second generation function". Furthermore, data h2 calculated by the reinforcement function A2 corresponds to an example of "second output data".

That is, layer Lj, which is the second layer, inputs second quantum data in a predetermined quantum state as an initial state to a quantum circuit Qj that has generated a quantum feature map for an output from a preceding layer Lj-1, and generates second output data.

Specifically, layer Lj, which is the second layer, accepts, as input data, first output data generated in layer L1, which is a layer arranged in a preceding stage, or second output data generated in layer Lj-1. Then, layer Lj, which is the second layer, causes a quantum feature map for the input data to be generated using the quantum circuit Qj, and generates a second feature quantity by measurement based on a quantum state output from the quantum feature map with the second quantum data as an initial state. Furthermore, layer Lj, which is the second layer, generates second output data to layer Lj+1 arranged in a subsequent stage using a second generation function for the second feature quantity. Furthermore, layer Lj, which is the second layer, generates second entanglement between quantum bits for the second quantum data, and measures the second entanglement to generate the second feature quantity. Furthermore, layer Lj, which is the second layer, generates second output data by an operation that performs weighting on the second feature quantity using a second generation function for the second feature quantity. Furthermore, layer Lj, which is the second layer, generates the second feature quantity based on a plurality of feature quantities obtained by measuring the second quantum data using a plurality of types of measurement bases. Processing that causes layer Lj, which is the second layer, to generate data hj corresponds to an example of "second generation processing".

Thus, the machine learning model 100 has a plurality of layers Lj arranged in series, each of the plurality of layers Lj includes a quantum circuit Qj and a reinforcement function Aj which is a generation function, and an input of quantum data is accepted at layer L1, which is a first layer at the head of the plurality of layers Lj. The machine learning model 100 has a preceding layer Li and a subsequent layer Li+1 that are consecutive and included in the plurality of layers Lj. For example, if the preceding layer Li is layer L1, the subsequent layer Li+1 is layer L2, and if the preceding layer Li is layer L2, the subsequent layer Li+1 is layer L3. In the machine learning model 100, the preceding layer Li inputs an output generated by a generation function Ai included in the preceding layer Li based on an output of a quantum circuit Qi included in the preceding layer Li to a quantum circuit Qi+1 included in the subsequent layer Li+1.

Returning to FIG. 1, the description is continued. The server 10 executes the following processing for layer L1 of the machine learning model 100. The server 10 transmits quantum data in an initial state to the quantum computer 20, causes the quantum computer 20 to perform an operation of the quantum circuit Q1, and obtains a feature quantity. Next, the server 10 executes classical reinforcement on the feature quantity obtained from the quantum circuit Q1 using the classical reinforcement circuit C1, and calculates data h1.

Next, the server 10 executes the following processing for layer L2 of the machine learning model 100. The server 10 embeds data h1 in the quantum circuit Q2 of the quantum computer 20, and causes the quantum circuit Q2 to generate a quantum feature map. Then, the server 10 transmits quantum data in the same quantum state as the initial state of layer L1 as an initial state to the quantum computer 20, causes the quantum computer 20 to perform an operation of the quantum circuit Q2, and obtains a feature quantity. Next, the server 10 executes classical reinforcement on the feature quantity obtained from the quantum circuit Q2 using the classical reinforcement circuit C2, and calculates data h2.

The server 10 also executes processing similar to layer L2 for layer L3 of the machine learning model 100. Furthermore, in a case where layer Lj exists in a subsequent stage of layer L3 of the machine learning model 100, processing similar to layer L2 is also executed for layer Lj in the subsequent stage of layer L3.

The server 10 performs processing using the machine learning model 100 as described above, and executes training of the machine learning model 100 and inference using the machine learning model 100.

### Classical Computer

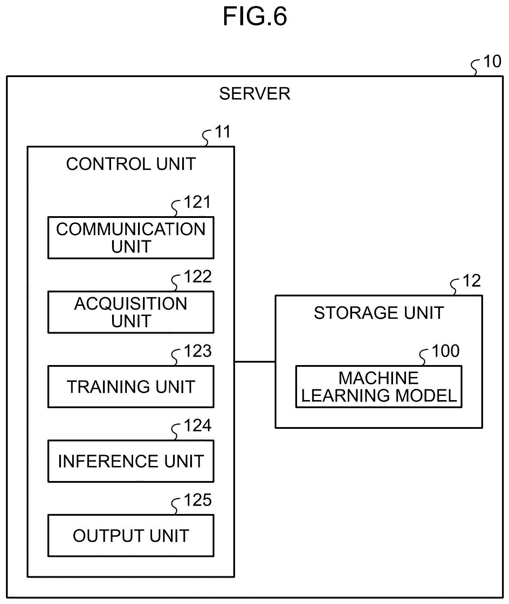

FIG. 6 is a block diagram of a server. Details of the server 10 will be described with reference to FIG. 6. The server 10 has, for example, a control unit 11 and a storage unit 12. The control unit 11 has a communication unit 121, an acquisition unit 122, a training unit 123, an inference unit 124, and an output unit 125. The storage unit 12 stores the machine learning model 100. Here, the machine learning model 100 actually also includes the quantum circuit Qj realized by the quantum computer 20, but since the server 10 has the overall configuration of the machine learning model 100, the storage unit 12 is illustrated as storing the machine learning model 100.

The communication unit 121 communicates with the quantum computer 20 via a communication line. The communication unit 121 can also communicate with a database server or the like, not illustrated, via a communication line.

The acquisition unit 122 acquires a plurality of training data from a database server or the like via the communication unit 121. The acquisition unit 122 may acquire training data that has been input by a user via a user interface or a portable recording medium. The acquisition unit 122 may store the training data in the storage unit 12.

The training unit 123 communicates with the quantum computer 20 via the communication unit 121, and trains the machine learning model 100 using the training data. Training of the machine learning model 100 by the training unit 123 will be described below.

The training unit 123 selects the number of layers L of the machine learning model 100. Furthermore, the training unit 123 selects the entanglement circuit 101 and the basis transformation circuit 102 to be used in the quantum circuit Qj. Furthermore, for layers Lj other than layer L1, the training unit 123 selects the quantum feature map circuit 104 of the quantum circuit Qj. Furthermore, the training unit 123 determines a measurement function of the measurement circuit 103 of the quantum circuit Qj. Furthermore, the training unit 123 determines a classical reinforcement function in the classical reinforcement circuit Cj. Here, the training unit 123 may automatically select and determine various circuits in the machine learning model 100, or may select and determine based on information that has been input by a user.

Then, for each layer Lj, the training unit 123 notifies the quantum computer 20 of information on the entanglement circuit 101 and the basis transformation circuit 102 to be used in the quantum circuit Qj. Furthermore, for layers Lj other than layer L1, the training unit 123 notifies the quantum computer 20 of information on the quantum feature map circuit 104 to be used in the quantum circuit Qj. Furthermore, the training unit 123 notifies the quantum computer 20 of a measurement function of the measurement circuit 103 of the quantum circuit Qj. Hereinafter, information on various circuits used in the quantum circuit Qj of each layer Lj is referred to as "quantum circuit information".

When training the machine learning model 100, for layers Lj other than layer L1, the training unit 123 notifies the quantum computer 20 of information on an output from layer Lj-1 to be embedded in the quantum feature map circuit 104 of the quantum circuit Qj. The training unit 123 receives a measurement result from the quantum computer 20 and trains the machine learning model 100. The training unit 123 generates a trained machine learning model 100 and stores it in the storage unit 12.

Here, as described above, the machine learning model 100 has a structure in which the quantum circuit Qj of a j-th layer Lj and the quantum circuit Qj+1 of a (j+1)-th layer Lj+1 are connected via the reinforcement function Aj(gj,Wj). With this structure, the training unit 123 can train the machine learning model 100 by updating weights Wj without updating parameters included in each quantum circuit Qj.

### Training of Machine Learning Model

In an iterative quantum feature map, the training unit 123 advances training of the machine learning model 100 by, for example, performing learning of parameters used for classical reinforcement using a mechanism of contrastive learning and layer-by-layer training, without updating parameters of the quantum circuit Qj. Contrastive learning is a method of training so that features after classical reinforcement of sample pairs of correct and incorrect become easier to distinguish. By performing such training, the training unit 123 can reduce quantum resources used for learning.

Details of training of the machine learning model 100 by the training unit 123 will be described below. The training unit 123 executes layer-by-layer training on the machine learning model 100 as a whole. That is, the training unit 123 trains weights Wj, which are parameters of classical reinforcement of each layer Lj, one by one in order. When training Wj, the training unit 123 fixes WO to Wj-1 at values that have already been trained. Furthermore, the training unit 123 uses the above-described contrastive learning for training of each layer Lj.

For example, the case of the machine learning model 100 illustrated in FIG. 2 will be described. The training unit 123 trains W1 for layer L1 using a cost function of contrastive learning. Next, the training unit 123 trains W2 for layer L2 using a cost function of contrastive learning while fixing W1, which has already been trained. Next, the training unit 123 trains W3 for layer L3 using a cost function of contrastive learning while fixing W1 and W2, which have already been trained.

Furthermore, the training unit 123 according to the present embodiment trains the machine learning model 100 to perform learning according to a one-stage learning algorithm. The one-stage learning algorithm is an algorithm that causes the machine learning model 100 to learn to infer a correct label for input quantum data and output it as a predicted label. In training according to the one-stage learning algorithm, the training unit 123 trains the machine learning model 100 using data in which a label is embedded. For example, the training unit 123 generates data in which a label is embedded by calculating a tensor product of a quantum state and a label to generate a quantum state to be input.

Here, when using the one-stage learning algorithm, the entanglement circuit 101 receives, as input data, a tensor product of a quantum state and two types of labels that are one-hot encoded. Therefore, the entanglement circuit 101 uses a number of quantum bits obtained by increasing the number of quantum bits of the input quantum data by one. For example, in the case of the entanglement circuits 210 and 220 of FIG. 3, if the eight quantum bits illustrated in FIG. 3 are quantum bits of quantum data, the number of quantum bits actually used is 9.

Furthermore, when using the one-stage learning algorithm, the quantum feature map circuit 104 also uses a number of quantum bits obtained by increasing the number of quantum bits of the input quantum data by one. Therefore, for example, in the case of the quantum feature map circuit 104 illustrated in FIG. 5, the number of quantum bits used becomes 9, and when measuring with four bases, a quantum feature map that embeds a 9×4=36-dimensional vector is generated.

Returning to FIG. 2, the description is continued. As individual training of each layer Lj, the training unit 123 causes the classical reinforcement circuit Cj of each layer Lj to evaluate a feature quantity output from the quantum circuit Qj, and generates a value of a new parameter for searching for a minimum value of an objective function such as an energy function. At this time, the training unit 123 inputs, to layer L1, quantum data in a specific quantum state as quantum data in an initial state, as quantum data to be input to cause the quantum circuit Qj to output a feature quantity. Furthermore, the training unit 123 also inputs, for layer L2 and thereafter, quantum data in the same quantum state as the initial state in layer L1 as an initial state.

Then, the training unit 123 uses contrastive learning in training of each of the classical reinforcement circuits Cj. Next, contrastive learning used for individual training of each layer Lj will be described.

When performing contrastive learning, the training unit 123 generates a combination of positive example data x+ and negative example data x- from training data. For example, the training unit 123 generates positive example data x+ by embedding a correct label in known data, and generates negative example data x- by embedding an incorrect label in the same data as the positive example data x+.

For example, the training unit 123 generates data in which a label is embedded by calculating a tensor product of a quantum state and a label to generate a quantum state to be input. When quantum data is |ψ> and a label is |label>, the training unit 123 generates a quantum state to be input by the following formula (1).
$\left|ψ\right〉 ⊗ \left|label\right〉$ (1)

Then, the training unit 123 uses, for example, C(hj(x+),hj(x-)) as a cost function (Noise Contrastive Estimation) as illustrated in the following formula utilizing noise contrastive estimation as an evaluation function of contrastive learning of weights Wj (j=1 to L). Here, Wj is expressed by, for example, the following formula (2).

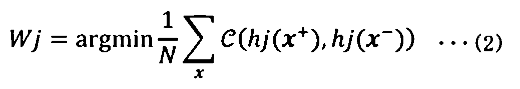

Furthermore, the cost function is expressed by the following formula (3).

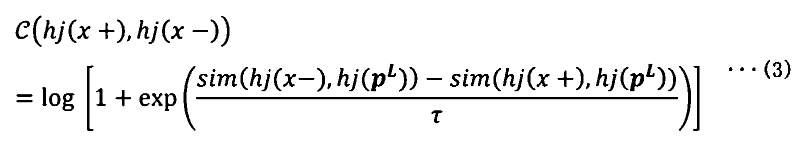

Here, τ is a scale adjustment parameter. Furthermore, N is the number of training data. Furthermore, p is an anchor vector. Furthermore, x+ is positive example data x+. Furthermore, x- is negative example data x-. Furthermore, hj(x+) is a feature quantity after classical reinforcement of positive example data x+. That is, hj(x+) is data hj generated using a reinforcement function Aj(gj, Wj) from data gj at layer j when positive example data x+ is input to the machine learning model 100. Furthermore, in the classical reinforcement function CL, hj(x-) is a feature quantity after classical reinforcement of the negative example data x-. That is, hj(x-) is data hj generated using a reinforcement function Aj(gj, Wj) from data gj at layer j when negative example data x- is input to the machine learning model 100. Furthermore, sim is a cosine similarity function. For example, cosine similarity is obtained by the following formula (4).
$sim \left(a, b\right) = \frac{A ⋅ B}{\left‖A\right‖ \left‖B\right‖} ∈ \left[-1,1\right]$ (4)

Here, A·B represents an inner product of vector A and vector B. Furthermore, ||A|| represents a norm of vector A, and ||B|| represents a norm of vector B.

The training unit 123 trains a weight Wj, which is a parameter of a classical reinforcement function, so that a feature quantity hj(x+) after classical reinforcement and a feature quantity hj(x-) can be distinguished, and minimizes C(hj(x+),hj(x-)).

When minimizing C(hj(x+),hj(x-)), the training unit 123 updates parameters so that sim(hj(x-),hj(p^{L}))-sim(hj(x+),hj(p^{L})) takes as large a value as possible. Here, -1≤sim(hj(x-), hj (p^{L})),sim(hj (x+), hj (p^{L}))≤1. Therefore, the training unit 123 minimizes C(hj(x+),hj(x-)) by causing sim(hj(x-),hj(p^{L})) to approach -1 and causing sim(hj(x+),hj (p^{L})) to approach 1. That is, the training unit 123 updates the weight Wj so that an anchor vector and positive example data x+ become close and an anchor vector and negative example data x- become distant.

The inference unit 124 communicates with the quantum computer 20 and generates an inference result by performing inference on inference data that is an inference target using the trained machine learning model 100. When causing the machine learning model 100 to perform inference, the inference unit 124 notifies the quantum computer 20 of information on the quantum circuit Qj for each layer Lj. Furthermore, in training of the machine learning model 100, for layers Lj other than layer L1, the inference unit 124 notifies the quantum computer 20 of information on an output from layer Lj-1 to be embedded in the quantum feature map circuit 104 of the quantum circuit Qj. Then, the training unit 123 receives a measurement result from the quantum computer 20 and uses it for training of the machine learning model 100. For example, when the machine learning model 100 is used for classification of data, the inference unit 124 performs the following processing.

The inference unit 124 individually embeds a plurality of candidate labels in inference data, respectively. Then, the inference unit 124 inputs each of inference data in which a candidate label is embedded to the machine learning model 100, and calculates a similarity between data hj, which is an output of each layer Lj, and an anchor vector used during training, using a similarity function. Then, the inference unit 124 sets, as an inference result, a label for which a sum of values of similarity of layer Lj becomes maximum.

Thus, in the one-stage learning algorithm, the training unit 123 and the inference unit 124 calculate a tensor product of first quantum data and a label, embed the label in the first quantum data, and generate labeled first quantum data. Then, the training unit 123 and the inference unit 124 cause layer L1 to generate a first feature quantity based on the labeled first quantum data. Furthermore, the training unit 123 and the inference unit 124 calculate a tensor product of second quantum data and a label, embed the label in the second quantum data, and generate labeled second quantum data. Then, the training unit 123 and the inference unit 124 cause layer Lj, which is the second layer, to generate a second feature quantity based on the labeled second quantum data.

The output unit 125 outputs an inference result obtained by the inference unit 124. For example, when the machine learning model 100 is used for classification of data, the output unit 125 outputs a classification result of inference data as a predicted label.

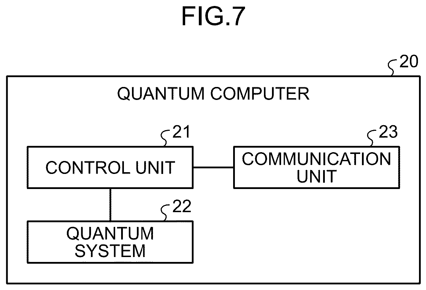

FIG. 7 is a block diagram of a quantum computer. The quantum computer 20 has a control unit 21, a quantum system 22, and a communication unit 23.

The communication unit 23 receives, from the server 10, information on the quantum circuit Qj including information on data hj-1 to be embedded in the quantum circuit Qj and information on a specific quantum state to be used as an initial state of quantum data in each layer Lj, and outputs it to the control unit 21. Thereafter, the communication unit 23 receives an input of a measurement value from the control unit 21 and transmits the measurement value to the server 10.

The control unit 21 generates a control signal using information on the quantum circuit Qj and outputs it to the quantum system 22. Then, the control unit 21 acquires a measurement value of each quantum bit obtained by the quantum system 22 according to the output control signal, and outputs it to the communication unit 23.

The quantum system 22 obtains a measurement value of each quantum bit by performing an operation of quantum bits according to a control signal input from the control unit 21. Then, the quantum system 22 outputs the measurement value to the control unit 21.

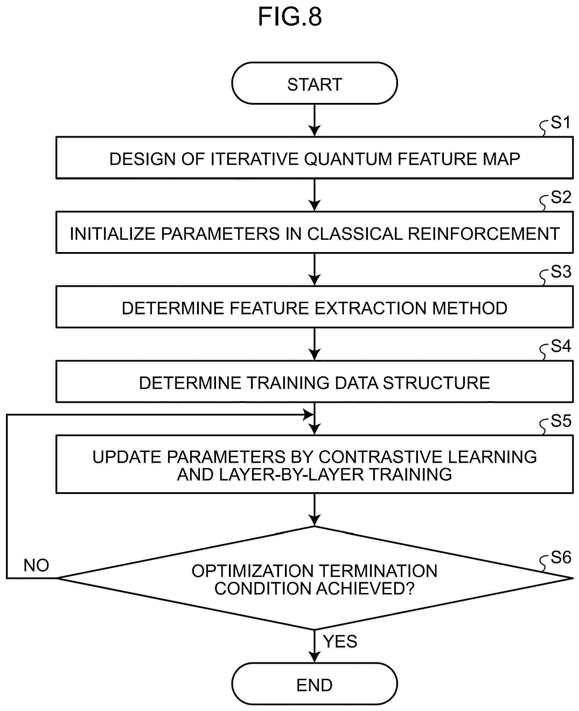

FIG. 8 is a flowchart of processing until completion of training by the quantum computer system. Next, with reference to FIG. 8, an overall flow of processing until completion of training by the quantum computer system 1 will be described.

The server 10 executes design of an iterative quantum feature map for the machine learning model 100 (step S1).

Next, the server 10 initializes parameters in classical reinforcement by the classical reinforcement circuit Cj of the iterative quantum feature map (step S2).

Next, the server 10 determines whether the feature quantity extraction method is the one-stage learning algorithm or the two-stage learning algorithm (step S3).

Next, the server 10 determines a training data structure (step S4). Here, the training data structure depends on an application used for training of the machine learning model 100. For example, in a case of an application that performs supervised contrastive learning, the server 10 determines to use a data structure in which training data and labels are integrated.

Next, the server 10 updates parameters by contrastive learning and layer-by-layer training, and trains the machine learning model 100 (step S5).

Next, the server 10 determines whether or not an optimization termination condition has been achieved (step S6). In a case where the optimization termination condition has not been achieved (step S6: negative), the server 10 returns to step S5. In contrast, in a case where the optimization termination condition has been achieved (step S6: affirmative), the server 10 terminates training of the machine learning model 100.

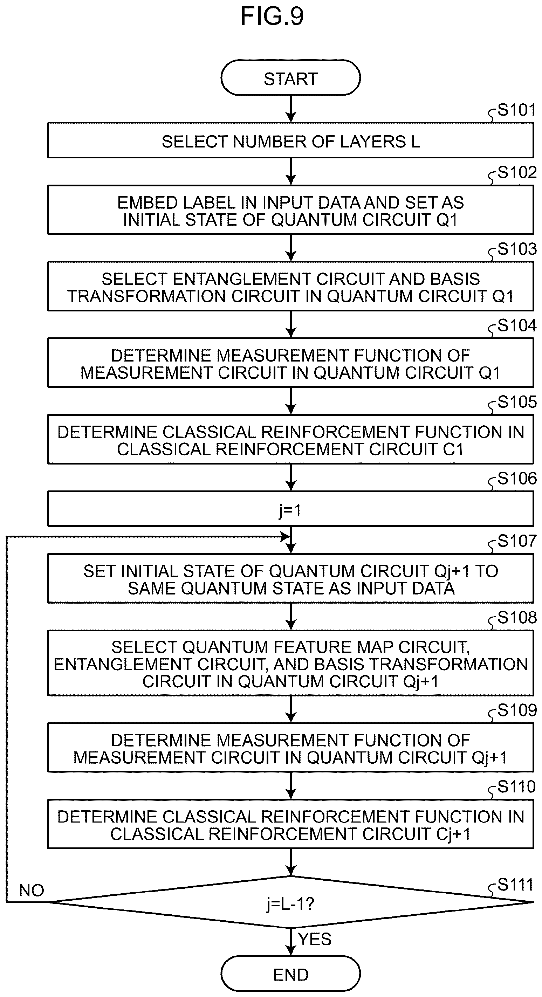

FIG. 9 is a flowchart of iterative quantum feature map design processing according to the first embodiment. Next, with reference to FIG. 9, a flow of iterative quantum feature map design processing according to the first embodiment will be described.

The training unit 123 selects the number of layers L of the machine learning model 100 (step S101).

Next, the training unit 123 embeds a label in input data to set it as an initial state of the quantum circuit Q1 (step S102).

Next, the training unit 123 selects the entanglement circuit 101 and the basis transformation circuit 102 in the quantum circuit Q1 (step S103).

Next, the training unit 123 determines a measurement function of the measurement circuit 103 in the quantum circuit Q1 (step S104).

Next, the training unit 123 determines a classical reinforcement function in the classical reinforcement circuit C1 (step S105).

Next, the training unit 123 sets j=1 (step S106).

Next, the training unit 123 sets an initial state of the quantum circuit Qj+1 to the same quantum state as the input data (step S107). That is, the training unit 123 makes the initial state of the quantum circuit Qj+1 the same as the initial state of the quantum circuit Q1.

Next, the training unit 123 selects the quantum feature map circuit 104, the entanglement circuit 101, and the basis transformation circuit 102 in the quantum circuit Qj+1 (step S108).

Next, the training unit 123 determines a measurement function of the measurement circuit 103 in the quantum circuit Qj+1 (step S109).

Next, the training unit 123 determines a classical reinforcement function in the classical reinforcement circuit Cj+1 (step S110).

Next, the training unit 123 determines whether or not j=L-1 (step S111). In a case where j is not L-1 (step S111: negative), the training unit 123 returns to step S107.

In contrast, in a case where j=L-1 (step S111: affirmative), the training unit 123 terminates the iterative quantum map design processing.

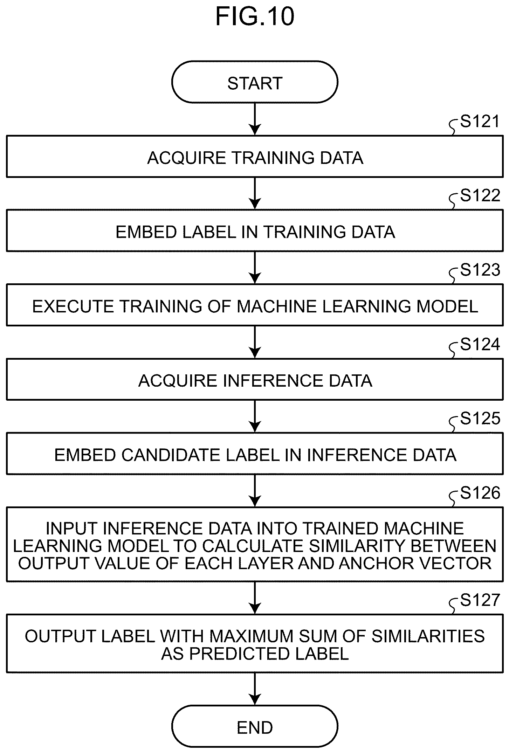

FIG. 10 is a flowchart of training processing and inference processing in a case of a one-stage learning algorithm. Next, with reference to FIG. 10, an overall flow of training processing and inference processing in a case of a one-stage learning algorithm will be described. However, although training processing and inference processing are described consecutively here, the training processing and the inference processing need not be performed consecutively.

The training unit 123 acquires training data (step S121).

Next, the training unit 123 calculates a tensor product of training data and a label, and embeds the label in the training data (step S122).

Next, the training unit 123 executes training of the machine learning model 100 using training data in which a label is embedded (step S123).

The inference unit 124 acquires inference data that is a classification target (step S124).

Next, the inference unit 124 calculates a tensor product of inference data and a label, and embeds the label in the inference data (step S125).

Next, the inference unit 124 inputs inference data in which a label is embedded to the trained machine learning model 100, and calculates a similarity between an output value of each layer Lj and an anchor vector for each layer Lj (step S126).

Next, the inference unit 124 infers a label for which a sum of similarities for each layer Lj becomes maximum as the label of the inference data. The output unit 125 outputs a label of inference data inferred by the inference unit 124 as a predicted label (step S127).

As described above, the quantum computer system 1 designs the machine learning model 100 that has a plurality of layers Lj and can input quantum data to the quantum circuit Q1 of the head layer L1. Furthermore, the quantum computer system 1 designs the machine learning model 100 of an iterative quantum feature map that uses the same quantum state as an initial state in any layer Lj. Then, the quantum computer system 1 executes training on the designed machine learning model 100 using contrastive learning and layer-by-layer training based on the one-stage learning algorithm.

By using the machine learning model 100 compatible with input of quantum data, the quantum computer system 1 can facilitate inference in a case where quantum data is obtained as inference data, such as when determining a material phase based on a wave function, and can improve inference accuracy. Furthermore, by extracting feature quantities using the same initial state in any layer Lj of the iterative quantum feature map, the quantum computer system 1 can suppress the loss of information of quantum data according to the depth of layers. As a result, the quantum computer system 1 can execute stable learning and can improve the inference accuracy of the machine learning model 100.

Furthermore, the quantum computer system 1 causes the quantum circuit Qj that performs feature quantity extraction in the iterative quantum feature map to be equipped with the entanglement circuit 101. The quantum circuit Qj can entangle a plurality of quantum bits to generate a strong correlation. As a result, quantum interference effects between quantum bits become complicated, and the quantum computer system 1 can distinguish states having different phases with high accuracy.

Furthermore, the quantum computer system 1 constructs an output based on measurement results using a plurality of different measurement bases. When layers are connected using a measurement result by one measurement basis, input information is easily lost, and there is a possibility that learning becomes unstable. In contrast, in the iterative quantum feature map in the quantum computer system 1, since an output of a quantum feature map is constructed based on measurement of a quantum state using a plurality of measurement bases, robustness of the machine learning model 100 in each layer increases. Therefore, the quantum computer system 1 can stabilize learning in deep layers of the machine learning model 100.

### (b) Second Embodiment

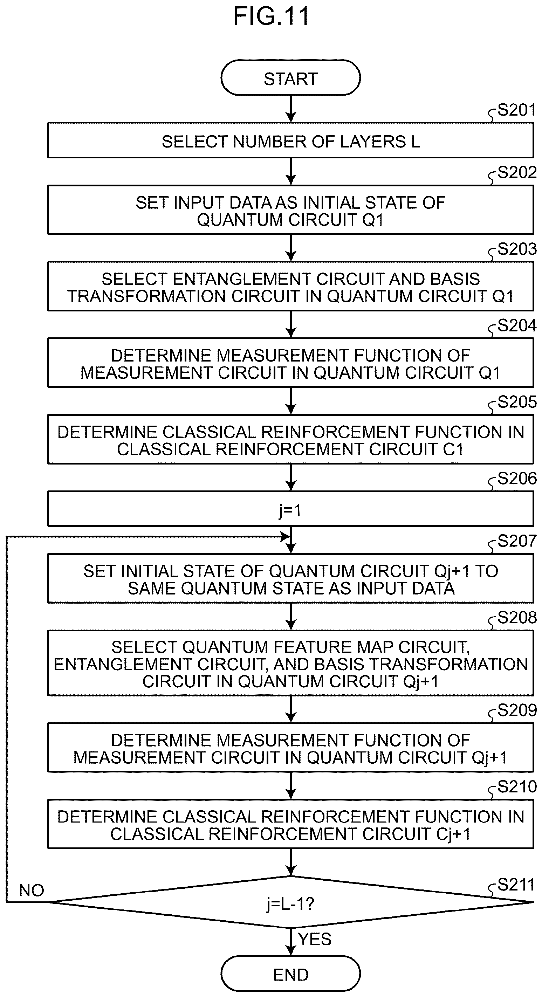

Next, the second embodiment will be described. The quantum computer system 1 according to the present embodiment differs from the first embodiment in a learning algorithm to be used. It is represented by the configuration diagram of FIG. 1. Furthermore, the quantum computer 20 is represented by the block diagram of FIG. 7. The server 10 is represented by the block diagram of FIG. 11. In the following description, description of operations similar to operations of each unit in the first embodiment may be omitted.

The server 10 according to the present embodiment stores a classifier 150 in the storage unit 12. The classifier 150 performs classification according to a determined label of input data. Note that the machine learning model 100 and the classifier 150 here can be considered together as one machine learning model, but in the present embodiment, a part having a configuration of an iterative quantum feature map is referred to as the machine learning model 100, and will be described separately from the classifier 150.

The training unit 123 trains the machine learning model 100 and the classifier 150 illustrated in FIG. 11 based on a two-stage learning algorithm. The two-stage learning algorithm is an algorithm including the following two stages. A first stage is a stage of performing training to cause the machine learning model 100 to infer a useful feature vector for input data. A second stage is a stage of training the classifier 150 using a useful feature vector output from the machine learning model 100 and a label.

The training unit 123 designs the machine learning model 100 that has a configuration similar to the iterative quantum feature map illustrated in FIG. 2 and is compatible with the two-stage learning algorithm.

FIG. 11 is a flowchart of iterative quantum feature map design processing according to the second embodiment. Here, with reference to FIG. 11, a flow of iterative quantum feature map design processing by the training unit 123 will be described.

The training unit 123 selects the number of layers L of the machine learning model 100 (step S201).

Next, the training unit 123 sets input data as an initial state of the quantum circuit Q1 without embedding a label in the input data in order to use the two-stage learning algorithm (step S202).

Next, the training unit 123 selects the entanglement circuit 101 and the basis transformation circuit 102 in the quantum circuit Q1 (step S203).

Next, the training unit 123 determines a measurement function of the measurement circuit 103 in the quantum circuit Q1 (step S204).

Next, the training unit 123 determines a classical reinforcement function in the classical reinforcement circuit C1 (step S205).

Next, the training unit 123 sets j=1 (step S206).

Next, the training unit 123 sets an initial state of the quantum circuit Qj+1 to the same quantum state as the input data (step S207). That is, the training unit 123 makes the initial state of the quantum circuit Qj+1 the same as the initial state of the quantum circuit Q1.

Next, the training unit 123 selects the quantum feature map circuit 104, the entanglement circuit 101, and the basis transformation circuit 102 in the quantum circuit Qj+1 (step S208).

Next, the training unit 123 determines a measurement function of the measurement circuit 103 in the quantum circuit Qj+1 (step S209).

Next, the training unit 123 determines a classical reinforcement function in the classical reinforcement circuit Cj+1 (step S210).

Next, the training unit 123 determines whether or not j=L-1 (step S211). In a case where j is not L-1 (step S211: negative), the training unit 123 returns to step S207.

In contrast, in a case where j=L-1 (step S211: affirmative), the training unit 123 terminates the iterative quantum map design processing.

Next, the training unit 123 executes training of the machine learning model 100 that is an iterative quantum feature map. At this time, the training unit 123 executes layer-by-layer training using contrastive learning on the machine learning model 100 without embedding a label in training data.

Furthermore, the training unit 123 trains the classifier 150 using a feature vector for input data obtained by the machine learning model 100 and a label.

The inference unit 124 inputs inference data to the classifier 150 and acquires an inference result of a label of the inference data.

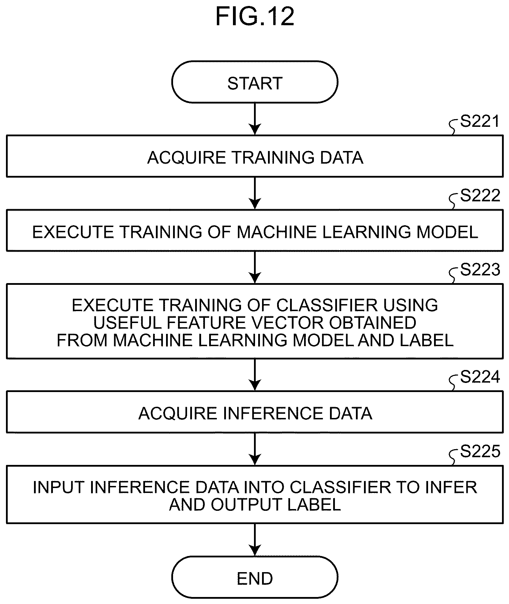

FIG. 12 is a flowchart of training processing and inference processing in a case of a two-stage learning algorithm. Next, with reference to FIG. 12, an overall flow of training processing and inference processing in a case of a two-stage learning algorithm will be described. However, although training processing and inference processing are described consecutively here, the training processing and the inference processing need not be performed consecutively.

The training unit 123 acquires training data (step S221).

Next, the training unit 123 executes training of the machine learning model 100 using the training data (step S222).

Next, the training unit 123 executes training of the classifier 150 using a useful feature vector for the training data obtained by the machine learning model 100 and a label (step S223).

The inference unit 124 acquires inference data that is a classification target (step S224).

Next, the inference unit 124 inputs inference data to the classifier 150, causes the classifier to infer a label of the inference data, and acquires an inference result. The output unit 125 outputs the inference result as a predicted label (step S225).

As described above, the server 10 according to the present embodiment performs training according to the two-stage learning algorithm using the machine learning model 100 having a configuration of an iterative quantum feature map and the classifier 150. Thus, even with an iterative quantum feature map trained by the two-stage learning algorithm, the server 10 can facilitate inference in a case where quantum data is obtained as inference data, such as when determining a material phase based on a wave function, and can improve inference accuracy. Furthermore, the server 10 can suppress the loss of information of quantum data according to the depth of layers of the iterative quantum feature map, can execute stable learning, and can improve the inference accuracy of the machine learning model 100.

Furthermore, an example of inference performed by the quantum computer system 1 according to each embodiment will be described. Here, a case will be described as an example where a ground state wave function parameterized by a Hamiltonian H of the following formula (5) is inference data.
$\hat{H} = - J {\sum }_{i = 1}^{N - 2} \left({\hat{Z}}_{i}{\hat{X}}_{i + 1}{\hat{Z}}_{i + 2}\right) - h 1 {\sum }_{i = 1}^{N} \left({\hat{X}}_{i}\right) - h 2 {\sum }_{i = 1}^{N - 1} \left({\hat{X}}_{i}{\hat{X}}_{i + 1}\right)$ (5)

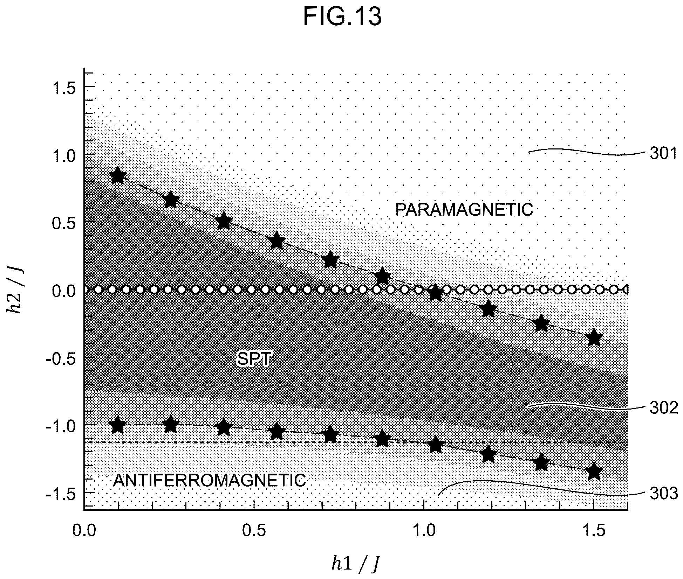

FIG. 13 is a diagram illustrating an example of a material phase that is an inference target. FIG. 13 represents h1/j on a vertical axis and h2/j on a horizontal axis. In this case, as material phases, there exist a paramagnetic phase of region 301, an SPT (Symmetry Protected Topological) phase of region 302, and a ferromagnetic phase of region 303. A ground state represented by a ground state wave function of formula (5) is classified into one of the phases according to values of j, h1, and h2.

Furthermore, the dataset used here is a set of quantum state data that is data of complex coefficients represented by a wave function of a ground state obtained from a Hamiltonian matrix of 8 quantum bits. A training dataset includes 80 pieces of quantum state data including three types: paramagnetic phase, SPT phase, and ferromagnetic phase. A test dataset used as inference data includes 800 pieces of quantum state data including three types: paramagnetic phase, SPT phase, and ferromagnetic phase.

Furthermore, the server 10 executes training of each of the machine learning model 100 in a case of using the one-stage learning algorithm and the machine learning model 100 and the classifier 150 in a case of using the two-stage learning algorithm.

The server 10 executes training using the one-stage learning algorithm under the following conditions. An anchor vector is fixed as a random vector. Positive example data is data in which a correct label is embedded in each training data. Negative example data is data in which a label randomly selected from labels that are not correct is embedded in each training data.

Furthermore, the server 10 executes training using the two-stage learning algorithm under the following conditions. An anchor vector is a feature after classical reinforcement of each training data. Positive example data is data randomly selected from data having the same label as each training data. Negative example data is data randomly selected from data having a label different from each training data.

Furthermore, the server 10 has the entanglement circuits 210 and 220 illustrated in FIG. 3, and has the quantum feature map circuit 104 illustrated in FIG. 5.

Furthermore, a comparison target is an inference result in a case of using an iterative quantum feature map that has the entanglement circuit 101 and does not have a re-input structure that uses the same initial state in each layer Lj. In the iterative quantum feature map that does not have a re-input structure, initial states of layers Lj from layer L2 onward are all 10>. Hereinafter, the iterative quantum feature map of the comparison target that does not have a re-input structure is referred to as "iterative quantum feature map of comparison target".

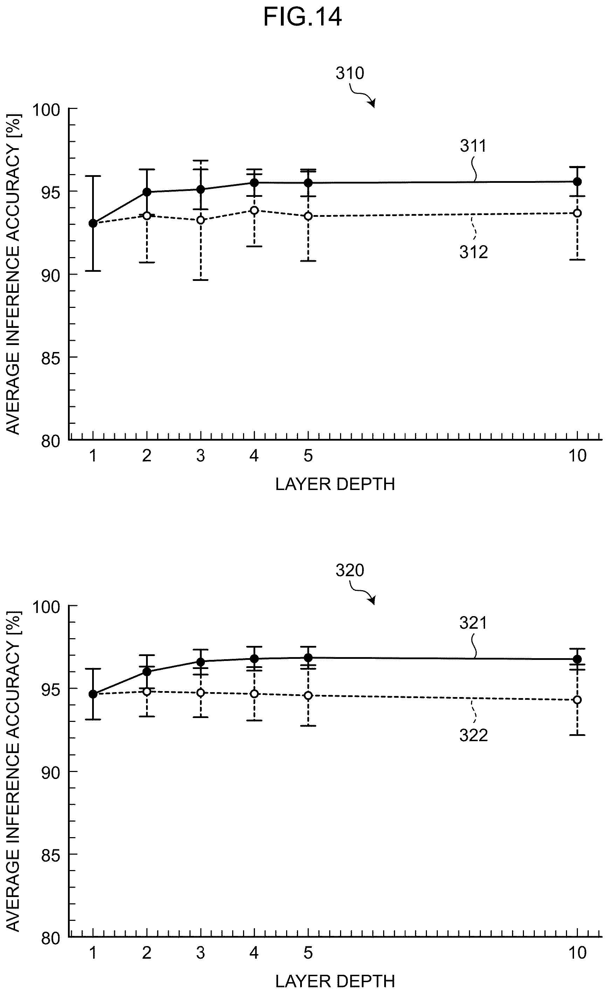

FIG. 14 is a diagram illustrating experimental results. Graph 310 represents a comparison of inference results in a case of using the one-stage learning algorithm. Graph 320 represents a comparison of inference results in a case of using the two-stage learning algorithm. In both graphs 310 and 320, a vertical axis represents an average inference accuracy, and a horizontal axis represents layer depth.

Curve 311 of graph 310 illustrates an inference result by the iterative quantum feature map of the comparison target. Curve 312 illustrates an inference result by the iterative quantum feature map of the server 10 according to the present embodiment. Furthermore, curve 321 of graph 320 illustrates an inference result by the iterative quantum feature map of the comparison target. Curve 322 illustrates an inference result by the iterative quantum feature map of the server 10 according to the present embodiment. Here, in each test, a rotation angle in the basis transformation circuit 102, a rotation angle in the entanglement circuit 101, selection methods of positive example data and negative example data in contrastive learning, and an anchor vector in the one-stage learning algorithm are elements determined by a random seed. That is, each test was made different by appropriately varying those elements.

In a case of using the one-stage learning algorithm, as illustrated by curve 312 and curve 311, even as the layers become deeper, the server 10 according to the present embodiment maintains higher inference accuracy compared to a case of using the iterative quantum feature map of the comparison target. Furthermore, even in a case of using the two-stage learning algorithm, as illustrated by curve 322 and curve 321, even as the layers become deeper, the server 10 according to the present embodiment maintains higher inference accuracy compared to a case of using the iterative quantum feature map of the comparison target. Therefore, in both cases of the one-stage learning algorithm and the two-stage learning algorithm, the server 10 according to the present embodiment stabilizes learning in deep layers compared to a case of using the iterative quantum feature map of the comparison target. Therefore, the server 10 can improve the inference accuracy of the machine learning model 100.

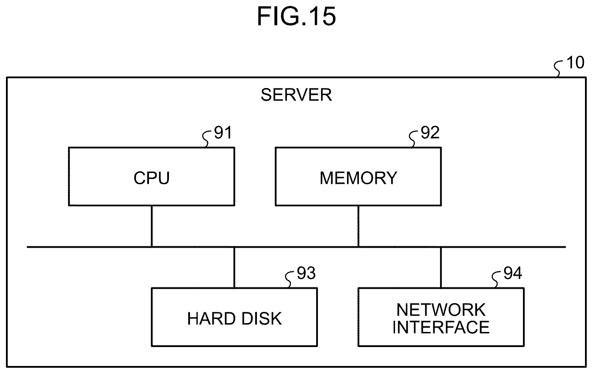

FIG. 15 is a hardware configuration diagram of a server. Next, with reference to FIG. 15, an example of a hardware configuration for realizing each function of the server 10 of the first and second embodiments will be described.

The server 10 has a CPU 91, a memory 92, a hard disk 93, and a network interface 94. The CPU 91 is connected to the memory 92, the hard disk 93, and the network interface 94 via a bus.

The network interface 94 is an interface for communication between the server 10 and an external device. The network interface 94 realizes part of the functions of the communication unit 121 illustrated in FIGS. 6 and 11.

The hard disk 93 is an auxiliary storage device. The hard disk 93 realizes the functions of the storage unit 12 illustrated in FIGS. 6 and 11. Furthermore, the hard disk 93 stores various programs including a program for realizing functions of the control unit 11 including the communication unit 121, the acquisition unit 122, the training unit 123, the inference unit 124, and the output unit 125 illustrated in FIG. 1.

The memory 92 is a main storage device. The memory 92 can use, for example, DRAM (Dynamic Random Access Memory).

The CPU 91 reads various programs from the hard disk 93, loads them into the memory 92, and executes them. As a result, the CPU 91 realizes functions of the control unit 11 including the communication unit 121, the acquisition unit 122, the training unit 123, the inference unit 124, and the output unit 125 illustrated in FIG. 1.

In one aspect, the present invention can improve the inference accuracy of a machine learning model.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. An information processing program that causes a computer to execute a process comprising:
in a machine learning model configured to have a plurality of layers arranged in series, each of the plurality of layers including a quantum circuit and a generation function, an input of quantum data being accepted at a first layer at a head of the plurality of layers, and a preceding layer of two consecutive layers included in the plurality of layers inputting an output generated by the generation function included in the preceding layer based on an output of the quantum circuit included in the preceding layer to the quantum circuit included in a subsequent layer of the two consecutive layers,
inputting first quantum data in a predetermined quantum state as an initial state to the first layer and causing first output data to be generated; and
inputting, in each of a plurality of second layers arranged in a subsequent stage to the first layer in the plurality of layers, second quantum data in the predetermined quantum state as an initial state to a quantum circuit that has generated a quantum feature map for an output from a layer arranged in a preceding stage of each of the plurality of second layers, and causing second output data to be generated.

2. The information processing program according to claim 1, wherein the program causes the computer to further execute a process of
generating a first feature quantity by measurement based on the first quantum data using the quantum circuit, and generate the first output data using a first generation function for the first feature quantity, by the first layer; and
accepting, as input data, the first output data generated in the first layer, which is a layer arranged in a preceding stage, or the second output data generated in the second layer, generating the quantum feature map for the input data using the quantum circuit, and generate a second feature quantity by measurement based on a quantum state output from the quantum feature map with the second quantum data as an initial state, and generating the second output data to the second layer arranged in a subsequent stage using a second generation function for the second feature quantity.

3. The information processing program according to claim 2, wherein the program causes the computer to further execute a process of
generating first entanglement between quantum bits for the first quantum data and measuring the first entanglement to generate the first feature quantity, and
generating second entanglement between quantum bits for the second quantum data and measuring the second entanglement to generate the second feature quantity.

4. The information processing program according to claim 2 or 3, wherein the program causes the computer to further execute a process of
calculating a tensor product of the first quantum data and a label, embedding the label in the first quantum data to generate the labeled first quantum data, and generating the first feature quantity based on the labeled first quantum data, and
calculating a tensor product of the second quantum data and a label, embedding the label in the second quantum data to generate the labeled second quantum data, and generating the second feature quantity based on the labeled second quantum data.

5. The information processing program according to claim 2, 3, or 4, wherein the program causes the computer to further execute a process of
generating the first output data by an operation that performs weighting on the first feature quantity using a weight that is a parameter of the first generation function, and
generating the second output data by an operation that performs weighting on the second feature quantity using a weight that is a parameter of the second generation function.

6. The information processing program according to any of claims 2 to 5, wherein the program causes the computer to further execute a process of
generating the first feature quantity based on a plurality of feature quantities obtained by measuring the first quantum data using a plurality of types of measurement bases, and
generating the second feature quantity based on a plurality of feature quantities obtained by measuring the second quantum data using a plurality of types of measurement bases.

7. An information processing method carried out by a computer, comprising:
in a machine learning model configured to have a plurality of layers arranged in series, each of the plurality of layers including a quantum circuit and a generation function, an input of quantum data being accepted at a first layer at a head of the plurality of layers, and a preceding layer of two consecutive layers included in the plurality of layers inputting an output generated by the generation function included in the preceding layer based on an output of the quantum circuit included in the preceding layer to the quantum circuit included in a subsequent layer of the two consecutive layers, the information processing method comprising:
inputting first quantum data in a predetermined quantum state as an initial state to the first layer and causing first output data to be generated; and
inputting, in each of a plurality of second layers arranged downstream of the first layer in the plurality of layers, second quantum data in the predetermined quantum state as an initial state to a quantum circuit that has generated a quantum feature map for an output from a layer arranged upstream of each of the plurality of second layers, and causing second output data to be generated.

8. An information processing device comprising:
a machine learning model configured to have a plurality of layers arranged in series, each of the plurality of layers including a quantum circuit and a generation function, an input of quantum data being accepted at a first layer at a head of the plurality of layers, and a preceding layer of two consecutive layers included in the plurality of layers inputting an output generated by the generation function included in the preceding layer based on an output of the quantum circuit included in the preceding layer to the quantum circuit included in a subsequent layer of the two consecutive layers; and
a control unit (11) configured to input first quantum data in a predetermined quantum state as an initial state to the first layer of the machine learning model and cause first output data to be generated, and in each of a plurality of second layers arranged in a subsequent stage to the first layer in the plurality of layers, input second quantum data in the predetermined quantum state as an initial state to a quantum circuit that has generated a quantum feature map for an output from a layer arranged in a preceding stage of each of the plurality of second layers, and cause second output data to be generated.
